# EUROPEAN PATENT SPECIFICATION

(11) **EP 4 126 678 B1**
(45) Date of publication and mention of the grant of the patent: **01.01.2025**
(21) Application number: 20927802.7
(22) Date of filing: 06.11.2020
(51) Int. Cl.: B65B 65/00, B65G 47/91, B65G 65/00, B65G 1/04, B65G 1/137

(54) **AUTOMATIC ORDER SORTING AND PACKAGING MACHINE**
AUTOMATISCHE SORTIER- UND VERPACKUNGSMASCHINE
MACHINE AUTOMATIQUE DE TRI ET D'EMBALLAGE DE COMMANDES

(30) Priority: 23.03.2020 TR 202004463
(43) Date of publication of application: 08.02.2023
(73) Proprietor: Alp Havacilik Sanayi Ve Ticaret Anonim Sirketi, Odunpazari/Eskisehir (TR)
(72) Inventor: AYDIN, Alper, Eski ehir (TR); ALTIOK, Serdar, Eski ehir (TR)
(74) Representative: Gülser Kinali, Zeynep
(86) International application number: PCT/TR2020/051057
(87) International publication number: WO 2021/194444

(56) References cited:
- CN-A- 108 945 594
- CN-A- 109 533 487
- CN-A- 110 589 139
- IT-A1- TO 990 349
- US-A- 3 076 566
- US-A- 3 624 792
- US-A1- 2018 268 353

## Description

### Technical Field

The invention relates to the machines used to classify industrial products, cutting tools (solid milling cutter, milling cutter with fitted insert, inserts etc.), medicine, food and monopoly products and prepare them according to the incoming order.

The invention especially relates to an automatic order sorting and packaging machine that enables the sorting of the products kept in the storages, their preparation and packaging according to the incoming orders, the automatic placement of the waybill/invoice into the package and the sealing and labeling of the package.

### Prior Art

Today, industrial products, medicines, food and monopoly products manufactured in different types and varieties are placed in large boxes and kept in warehouses to be prepared for sale. The products kept in the storages are classified according to the type and number in the incoming order and packaged. If the packaging process is carried out manually based entirely on the operator, the error rate increases as the number of orders increases. For this reason, machines are used to make the process of preparing products by classifying according to the incoming orders based on automation.

Order preparation machines used in the current technique are generally large-sized machines that can only perform sorting according to the order received. Although the automatic packaging process cannot be carried out in these machines, which do not have a modular structure, take up a lot of space due to their size and are high in cost, the correct product information cannot be controlled. At the same time, since these machines cannot be loaded automatically, the loading process is carried out by the operators and loading cannot be done while the system is running. For the packaging process, the operator must manually place the products classified by the machine into the boxes and place the invoice/waybill into the box after packaging. Therefore, it is not possible to achieve full automation in the packaging process in the machines of the current technique.

In the research conducted in the literature, the document numbered TR2019/05669 can be shown as an example of order preparation machines. The aforementioned document is related to the automatic box ordering and sorting machine. In this invention, it is mentioned that manual box sorting is done automatically and order taking is performed on the internet. However, since said machine has large size, it only performs the sorting process, the process of placing the products in boxes and placing the invoice/waybill in the boxes is done by the operators. Therefore, the order preparation process is carried out based on the operator and automation cannot be fully provided. At the same time, it is not possible to put products into the storage chamber with packages. Sorting the products into the storage chamber one by one causes labor and time losses.

Another example of the state of the art is the document number TR2019/12720, which was previously developed by applicant. The aforementioned document relates to a machine comprising a single or multiple magazine unit which is able to make 360° rotation movement that allows single or multiple products with cassettes containing products to be sorted and dropped to the conveyor by means of pushers in order to classify the products, prepare and pack them according to the incoming orders, automatically place the waybill/invoice in the package and seal and label the package. In the mentioned machine, the products must be loaded into the cassettes in the magazine unit one by one. This causes a waste of time and also, due to the size of the magazine unit, it takes up more space in the area.

Another example of the state of the art is US3076566A which discloses automated warehousing systems designed to handle articles by removing them from storage and delivering them to collection points, addressing challenges like labor costs associated with manual picking and sorting of orders, particularly in industries like dress pattern warehousing where orders often consist of single items. US307656 6A discloses the features of the preamble of claim 1.

US2018268353A1 discloses an object handling apparatus includes a first mechanism and a second mechanism. The first mechanism draws an adapter arranged in a rack, one or more objects being placed on the adapter. The second mechanism moves the one or more objects toward a side where the one or more objects are taken out from the adapter.

As a result, the existence of the above problems and insufficiency of existing solutions made it necessary to make an improvement in the related technical field.

### Object of the Invention

The present invention relates to an automatic order sorting and packing machine that removes the above-mentioned disadvantages and brings new advantages to the related technical field.

The main object of the invention is; classifying the products, preparing them according to the incoming orders, packing them, placing the waybill/invoice in the package automatically and labeling the package by closing.

Another object of the invention is to take the boxes, cartons or packages through the piston system from the shelf system with the desired amount of packages depending on the commands sent over the control unit, and to send them to the packaging unit with the conveyor and to prepare the order.

Another object of the invention is to obtain a packaging machine with modular structure, thanks to its ability to increase and decrease its size according to the order ratio.

Another object of the invention is to obtain a packaging machine that has a conveyor that takes up a small space in the place, thanks to its flat, "S", "U", "L" or different geometric shapes in order to transport the products taken from the shelf system to be placed in packages.

Another object of the invention is to obtain a packaging machine that takes up a small space in the place thanks to the modular structure shelf system that can be arranged side by side, "U" shaped, perpendicular to each other or "L" shaped, and can be enlarged and downsized according to the number of orders.

Another object of the invention is to obtain a packaging machine that can be loaded into the shelf system during operation.

Another object of the invention is to obtain a packaging machine that requires minimum manpower thanks to the automatic performance of sorting, packaging, control and loading processes.

Another object of the invention is to obtain a reliable packaging machine that prevents incorrect loading and improper order preparation, thanks to the barcode system that checks whether the shelf system is loaded correctly.

Another object of the invention is to obtain a time-saving packaging machine by placing the packages directly into the shelf system without being subjected to extra loading. Another object of the invention is to obtain a packaging machine that enables the shelf system, in which boxes are placed, to function as a warehouse at the same time.

Another object of the invention is to obtain a packaging machine that can follow the inventory of boxes, cartons or packages in the parcels through the control unit and provide instant learning of the quantity information.

Another object of the invention is to obtain a packaging machine that enables the repetition of the same process until the process is completed, or the operations are stopped or an error message is given or the order is canceled if the boxes, cartons or packages in the parcel are taken incompletely due to sticking together.

Another object of the invention is to obtain a packaging machine that enables the waybill/invoice to be automatically placed into the package in the packaging process.

Another object of the invention is to obtain a packaging machine that automatically prints the address label on the package.

Another object of the invention is to obtain a packaging machine which checks that the correct product is placed in the shelf system by reading the barcodes on the boxes in the shelf system.

Another object of the invention is to obtain a packaging machine that can prepare orders in a short time thanks to its automatic operation.

In order to fulfill all the objects stated above and that can be derived from the detailed description, the invention relates to a machine used to classify industrial products, cutting tools (solid milling cutter, milling cutter with fitted insert, inserts etc.), medicine, food and monopoly products and prepare them according to the incoming order.

The invention characteristically comprises;
- Shelf system with multiple shelves that contain products in the form of cardboard, boxes or gelatin packages on it, and boxes that are read by barcode/chip are loaded and the number of shelves can be increased or decreased according to the order ratio,
- Piston system with pistons positioned opposite the shelf system and allowing the products on the shelves to be vacuumed by means of suction cups in accordance with the order and taken from the shelf,
- The tray, which is located between the shelf system and the piston system and on which the products received by the pistons are placed on it, can be moved up and down and back and forth,
- Conveyor located in the area where the tray is located and enabling the transportation of the products on the tray,
- Packaging unit that allows the delivery note or invoice of the order to be put into the packages together with the products transported from the conveyor and the open-mouthed packages are closed,
- Control system that receives the information of the products read with barcode/chip and enables the tracking of the occupancy amount and also sends a signal to the piston system to receive the products to create an order.

The structural and characteristic features and all the advantages of the invention will be understood more clearly thanks to the figures given below and the detailed description written by making references to these figures. Therefore, the evaluation should be made by taking these figures and detailed explanations into consideration.

### Figures to Help Understand the Invention

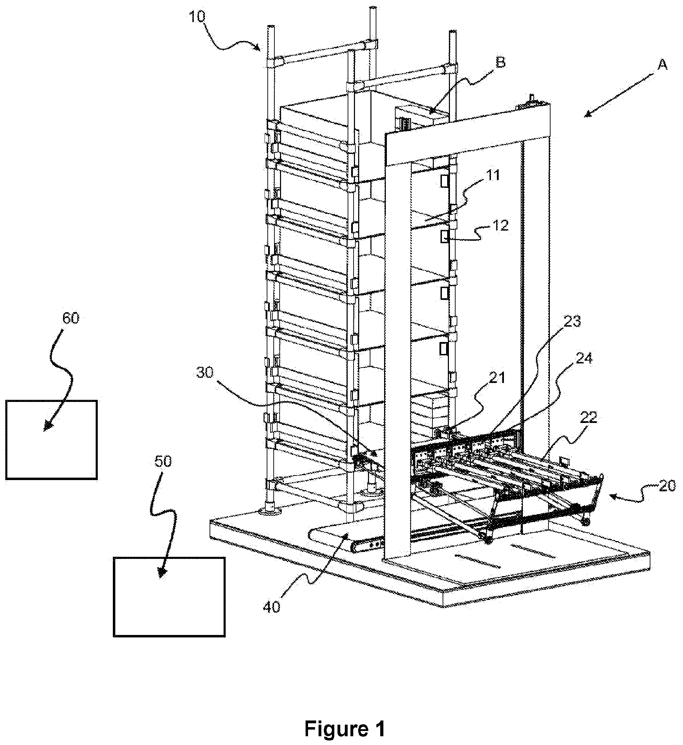

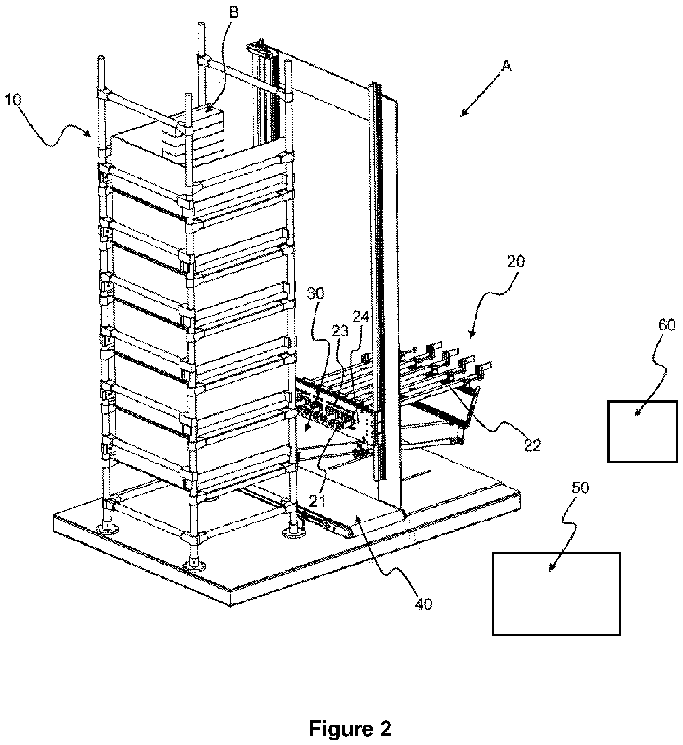

**Figure 1a:** The perspective view of the automatic order sorting and packaging machine that is the subject of the invention.
**Figure 1b:** The perspective view of the automatic order sorting and packaging machine that is the subject of the invention from another angle.

### Explanation of the Part References

- **10.**: Shelf system
- **11.**: Shelf
- **12.**: Barcode/chip
- **20.**: Piston system
- **21.**: Suction cup
- **22.**: Piston
- **23.**: Sensor
- **24.**: Adjustment device
- **30.**: Tray
- **40.**: Conveyor
- **50.**: Packaging unit
- **60.**: Control system

- **A.**: Automatic order sorting and packaging machine
- **B.**: Product

### Detailed Description of the Invention

In this detailed description, the preferred alternatives of the automatic order sorting and packaging machine (A) which is the subject of the invention are explained only for a better understanding of the subject and without any restrictive effect.

In Figures 1a and 1b, the view of the automatic order sorting and packaging machine (A) which is the subject of the invention is given. Accordingly, the automatic order sorting and packing machine (A) generally comprises a shelf system (10) with multiple shelves (11) positioned one on top of the other, on which the cartons, boxes or gelatin package shaped products (B) are loaded with the boxes read by the barcode/chip (12), a piston system (20) with pistons (22) that enable the products (B) on the shelves (11) to be vacuumed through the suction cup (21) in accordance with the order and taken from the shelf (11), a tray (30) moving up and down and back and forth on which the products (B) taken by means of pistons (22) are placed on, a conveyor (40) that enables the products (B) to be transported on the tray (30), a packaging unit (50) that enables the delivery note or invoice belonging to the order to be put into the packages together with the products (B) transported from the conveyor (40) and the open-mouthed packages are closed, a control system (60) that receives the information of the products (B) read with the barcode/chip (12) and enables the tracking of the occupancy amount and at the same time sends a signal to the piston system (20) to receive the products (B) to create an order.

The shelf system (10) has multiple shelves (11) positioned one on top of the other where products in the form of cardboard, box or gelatin packs (B) are loaded with parcels, and barcode/chip (12) placed on the shelves (11). The shelves (11) have a modular structure and their number can be increased or decreased. The shelf system (10) can be arranged side by side, in "U" shape, perpendicular to each other or in an "L" shape within its usage area. Parcels containing products (B) in the form of cardboard, box or gelatin packs are placed manually on the shelves (11) with their mouths open.

During the operation of the automatic order sorting and packaging machine (A), the shelves (11) can be loaded and full boxes can be loaded instead of empty boxes.

The barcode/chip (12) on the shelves (11) reads the fullness of the shelves (11) and what kind of products (B) are in the boxes and transmits them to the control system (60). The said barcode/chip (12) monitors the level of the shelves (11) continuously and reflects the information of the empty shelves (11) to the control system (60) as a warning.

The shelves (11) have a light and cover for placing the parcels that are read with the barcode/chip (12) before loading the parcels in the relevant area in the shelf system (10).

With the robot and/or automation system that can be added to the automatic order sorting and packaging machine (A), the loading of the parcels on the shelves (11) can be done automatically.

The piston system (20) is positioned against the shelf system (10). The said piston system (20) generally comprises more than one piston (22) to take the products (B) on the shelf (11) by vacuuming by means of the suction cup (21), a sensor (23) that controls whether the pistons (22) receive product (B) or not, an adjustment device (24) that enables the distance of the pistons (22) to be adjusted according to the dimensions of the products (B).

Between the shelf system (10) and the piston system (20), there is an up and down movable tray (30). The said tray (30) prevents the products (B) on the shelf (11) from falling and damaging while being taken from the shelf (11) with pistons (22) by pulling them through the suction cup (21). The tray (30) moves up and down while receiving the products (B) by means of the pistons (22), and back and forth to release the products (B) on the conveyor (40).

The conveyor (40), which is located in the area where the tray (30) is located and has a continuously rotating belt system, can be in flat, "S", "U", "L" or different geometric shapes to allow the products (B) to be transported to be placed in packages. The conveyor (40) can move the products (B) it carries up and down in order to rise upward as it approaches the packaging unit (50).

The packaging unit (50) ensures that the order, delivery note or invoice of the products (B) transported by the conveyor (40) is automatically placed and the stretch, plastic or paper bags or cardboard boxes are packaged by sealing them.

The control system (60) is the unit that receives the information of the products (B) read by the barcode / chip (12) and enables the tracking of the occupancy amount and at the same time sends a signal to the piston system (20) to receive the products (B) to create an order. The control system (60) checks the stocks for the incoming order and processes the order data and calculates how it can prepare the products (B) in the shortest and fastest way according to the order delivery addresses and transmitted to the piston system (20). Orders coming to the control system (20) can be withdrawn from ERP-style applications with intermediate integration.

Boxes inside the parcels or products in packages (B) may be covered with multi-box cardboard, stretch or nylon.

*The working principle of the automatic order sorting and packaging machine (A) subject to the invention is as follows.*

The barcode of the parcels brought to the shelf system (10) and containing the products (B) in the form of cardboard, box or gelatin package is scanned by means of the barcode/chip (12). The cover of the shelf (11) on which the parcel should be placed opens or its light turns on. It is placed on the shelf (11) whose light is on or the cover is opened, with its upper mouth opened. The information of which product is in the parcel placed, is transferred to the control system (60) while the barcode is being read by the barcode/chip (12).

When the order arrives at the automatic order sorting and packaging machine (A), the data is received by the control system (60) and the control system (60) calculates how it can prepare the products (B) in the shortest and fastest way according to the order delivery addresses and send a signal to the piston system (20).

In line with the signal received from the control system (60), it is ensured that the products (B) on the shelf (11) are vacuumed with the piston (22) by means of the suction cup (21) in the piston system (20). In the meantime, while the product is carried by one piston (22) in order not to drop the products (B) arranged side by side on the shelves (11), the other pistons (22) prevent them from coming by holding the other products on the shelf (11). In the meantime, whether the pistons (22) receive product (B) is checked by means of the sensor (23). If the products (B) on the shelf (11) are taken incompletely due to sticking together, the same process is repeated until the process is completed, or a signal is sent from the piston system (20) to the control system (60) in order to stop the operations or to give an error message or to cancel the order.

The product taken by the piston (22) is left in the tray (30). The tray (30) moves downward and approaches the conveyor (40) and pulls back and leaves the products (B) on the conveyor (40). Products (B) are transported to the packaging unit (60) via the conveyor (40). The products (B) delivered to the packaging unit (60) are automatically placed in the packages together with the order receipt or invoice. The open-mouthed package, in which the order receipt or invoice and the products (B) are placed, is automatically closed and the desired order is prepared.

The package at the farthest address from the storage area of the order is packaged first and the closest address in the order is packaged last. Thus, the nearest address can be delivered first, since the order was loaded last to the loaded vehicle.

## Claims

1. An automatic order sorting and packaging machine (A) used to classify industrial products, cutting tools, medicine, food and monopoly products and prepare them according to the incoming order, wherein the automatic order sorting and packaging machine comprises,
- Shelf system (10) with multiple shelves (11) that contain products (B) in the form of cardboard, boxes or gelatin packages on it, and boxes that are read by a barcode/chip (12) are loaded and the number of shelves can be increased or decreased according to the order ratio,
- Piston system (20) with pistons (22) positioned opposite the shelf system (10) and allowing the products (B) on the shelves (11) to be vacuumed by means of suction cups (21) in accordance with the order and taken from the shelf (11),
- Tray (30), which is located between the shelf system (10) and the piston system (20) and on which the products (B) received by the pistons (22) are placed,
- Conveyor (40) located in the area where the tray (30) is located and enabling the transportation of the products (B) on the tray
**characterized in that**,
the tray (30) can be moved up and down and back and forth, and **in that** the automatic order sorting and packaging machine further comprises a
- Packaging unit (50) that allows the delivery note or invoice of the order to be put into packages together with the products (B) transported from the conveyor (40) and the open-mouthed packages are closed, and a
- Control system (60) that receives the information of the products (B) read with the barcode/chip (12) and enables the tracking of the occupancy amount and also sends a signal to the piston system (20) to receive the products to create an order.

2. The automatic order sorting and packaging machine (A) according to Claim 1, **characterized in that**; said shelf system (10) is arranged side by side in its usage area, in "U" shape, perpendicular to each other or in "L" shape.

3. The automatic order sorting and packaging machine (A) according to Claim 1, **characterized in that**; the shelves (11) have a light and a cover to ensure that the parcels containing the products (B) and read with the barcode/chip (12) before loading to be placed in the relevant area in the shelf system (10).

4. The automatic order sorting and packaging machine (A) according to Claim 1, **characterized in that**; it comprises a sensor (23) located in the piston system (20) that indicates whether the pistons (22) receive product (B).

5. The automatic order sorting and packaging machine (A) according to Claim 1, **characterized in that**; it comprises an adjustment device (24) located in the said piston system (20) and that enables the distance between the pistons (22) to be adjusted according to the dimensions of the products (B).

6. The automatic order sorting and packaging machine (A) according to Claim 1, **characterized in that**; the tray (30) approaches the conveyor (40) by descending downwards in order to ensure that the products (B) taken by means of thepistons (21) are transferred to the conveyor (40) and leaves the products (B) on the conveyor (40) by pulling back.

7. The automatic order sorting and packaging machine (A) according to Claim 1, **characterized in that**; the conveyor (40) can be in flat, "S", "U", "L" or different geometric shapes and has a continuously rotating belt system to ensure the transportation of the products (B).

8. The automatic order sorting and packaging machine (A) according to Claim 1 or 7, **characterized in that**; said conveyor (40) can move up and down.

9. The automatic order sorting and packaging machine (A) according to Claim 1, **characterized in that**; the barcode/chip (12) on the shelves (11) reads the fullness of the shelves (11) and what kind of products (B) are in the boxes and monitors the level of the shelves (11) continuously and reflects the information of the empty shelves (11) to the control system (60).

10. The automatic order sorting and packaging machine (A) according to Claim 1, **characterized in that**; it comprises a robot and/or an automation system in order to automatically load the parcels on the said shelves (11).

## Patentansprüche

1. Maschine (A) für das automatische Sortieren und Verpacken von Bestellungen, die verwendet wird, um Industrieerzeugnisse, Schneidwerkzeuge, Medizin, Lebensmittel und Monopolprodukte zu klassifizieren und sie gemäß der eingehenden Bestellung vorzubereiten, wobei die Maschine für das automatische Sortieren und Verpacken von Bestellungen umfasst:
- ein Regalsystem (10) mit mehreren Regalen (11), die bestimmte Produkte (B) in der Form von Pappe, Kisten oder Gelatineverpackungen darauf enthalten, und Kisten, die durch einen Barcode/Chip (12) gelesen werden, beladen werden und die Anzahl der Regale gemäß dem Bestellungsverhältnis erhöht oder verringert werden kann,
- ein Kolbensystem (20) mit Kolben (22), die gegenüber dem Regalsystem (10) positioniert sind und es ermöglichen, dass die Produkte (B) auf den Regalen (11) mit Hilfe von Saugnäpfen (21) gemäß der Bestellung angesaugt werden und aus dem Regal (11) entnommen werden,
- eine Schale (30), die sich zwischen dem Regalsystem (10) und dem Kolbensystem (20) befindet und auf die die Produkte (B), die durch die Kolben (22) aufgenommen werden, platziert werden,
- ein Förderband (40), das sich in einem Bereich befindet, in dem sich die Schale (30) befindet und den Transport der Produkte (B) auf der Schale ermöglicht,
**dadurch gekennzeichnet, dass**
die Schale (30) nach oben und unten und nach vorne und hinten bewegt werden kann und dadurch, dass die Maschine für das automatische Sortieren und Verpacken von Bestellungen ferner umfasst:
- eine Verpackungseinheit (50), die es ermöglicht, dass ein Lieferschein oder eine Rechnung der Bestellung zusammen mit den Produkten (B), die von dem Förderband (40) transportiert werden, in Verpackungen gelegt werden und die offenen Verpackungen geschlossen werden, und
- ein Steuersystem (60), das die Informationen über die Produkte (B) empfängt, die mit dem Barcode/Chip (12) gelesen werden und die Nachverfolgung der Belegungsmenge ermöglicht und ebenso ein Signal an das Kolbensystem (20) sendet, um die Produkte zu empfangen, um eine Bestellung zu erstellen.

2. Maschine (A) für das automatische Sortieren und Verpacken von Bestellungen nach Anspruch 1, **dadurch gekennzeichnet, dass** das Regalsystem (10) in seiner Nutzfläche nebeneinander in "U"-Form, senkrecht zueinander oder in "L"-Form angeordnet ist.

3. Maschine (A) für das automatische Sortieren und Verpacken von Bestellungen nach Anspruch 1, **dadurch gekennzeichnet, dass** die Regale (11) eine Leuchte und eine Verpackung aufweisen, um sicherzustellen, dass die Pakete, die die Produkte (B) enthalten und mit dem Barcode/Chip (12) gelesen werden, bevor sie in den relevanten Bereich des Regalsystems (10) platziert werden.

4. Maschine (A) für das automatische Sortieren und Verpacken von Bestellungen nach Anspruch 1, **dadurch gekennzeichnet, dass** sie einen Sensor (23) umfasst, der sich in dem Kolbensystem (20) befindet, der anzeigt, ob die Kolben (22) ein Produkt (B) aufnehmen.

5. Maschine (A) für das automatische Sortieren und Verpacken von Bestellungen nach Anspruch 1, **dadurch gekennzeichnet, dass** sie eine Anpassungsvorrichtung (24) umfasst, die sich in dem Kolbensystem (20) befindet und die es ermöglicht, dass der Abstand zwischen den Kolben (22) gemäß den Abmessungen der Produkte (B) angepasst wird.

6. Maschine (A) für das automatische Sortieren und Verpacken von Bestellungen nach Anspruch 1, **dadurch gekennzeichnet, dass** die Schale (30) sich dem Förderer (40) nähert, indem sie nach unten sinkt, um sicherzustellen, dass die mit Hilfe der Kolben (21) entnommenen Produkte (B) auf das Förderband (40) übertragen werden, und die Produkte (B) durch Zurückziehen auf dem Förderband (40) hinterlässt.

7. Maschine (A) für das automatische Sortieren und Verpacken von Bestellungen nach Anspruch 1, **dadurch gekennzeichnet, dass** das Förderband (40) flach, "S", "U", "L" oder andere geometrische Formen aufweisen kann und ein kontinuierlich rotierendes Bandsystem aufweist, um den Transport der Produkte (B) sicherzustellen.

8. Maschine (A) für das automatische Sortieren und Verpacken von Bestellungen nach Anspruch 1 oder 7, **dadurch gekennzeichnet, dass** das Förderband (40) auf und ab bewegt werden kann.

9. Maschine (A) für das automatische Sortieren und Verpacken von Bestellungen nach Anspruch 1, **dadurch gekennzeichnet, dass** der Barcode/Chip (12) auf den Regalen (11) den Füllstand der Regale (11) und die Art der in den Kisten befindlichen Produkte (B) liest und den Füllstand der Regale (11) kontinuierlich überwacht und die Information über die leeren Regale (11) an das Steuersystem (60) weitergibt.

10. Maschine (A) für das automatische Sortieren und Verpacken von Bestellungen nach Anspruch 1, **dadurch gekennzeichnet, dass** sie einen Roboter und/oder ein Automatisierungssystem umfasst, um die Pakete automatisch in die Regale (11) zu laden.

## Revendications

1. Machine automatique de tri et d'emballage de commandes (A), utilisée pour classifier des produits industriels, des outils de coupe, des médicaments, des aliments, et des produits monopolistiques, et les préparer selon la commande arrivante, dans laquelle la machine automatique de tri et d'emballage de commandes comprend :
- un système de rayons (10) avec de multiples rayons (11) qui contiennent des produits (B) sous la forme d'emballages en carton, de boîtes, ou en gélatine, sur celui-ci, et des boîtes qui sont lues par l'intermédiaire d'un code à barres/d'une puce (12) sont chargées et le nombre de rayons peut être augmenté ou réduit selon le rapport de commande,
- un système de pistons (20) avec des pistons (22) positionnés en face du système de rayons (10) et permettant aux produits (B) sur les rayons (11) d'être aspirés au moyen de ventouses (21), conformément à la commande, et retirés du rayon (11),
- un plateau (30), qui est situé entre le système de rayons (10) et le système de pistons (20) et sur lequel les produits (B) reçus par les pistons (22) sont placés,
- un convoyeur (40) situé dans la zone où le plateau (30) est situé, et permettant le transport des produits (B) sur le plateau, **caractérisée en ce que**
le plateau (30) peut être déplacé vers le haut et vers le bas et en va-et-vient, et **en ce que** la machine automatique de tri et d'emballage de commandes comprend en outre :
- une unité d'emballage (50) qui permet au bon ou à la facture de livraison de la commande d'être mis(e) dans des emballages conjointement avec les produits (B) transportés depuis le convoyeur (40), et les emballages ouverts sont fermés, et
- un système de commande (60) qui reçoit les informations des produits (B) lus avec le code à barres/puce (12) et permet le suivi de la quantité d'occupation et également envoie un signal au système de pistons (20) pour recevoir les produits pour créer une commande.

2. Machine automatique de tri et d'emballage de commandes (A) selon la revendication 1, **caractérisée en ce que** : ledit système de rayons (10) est agencé côte à côte dans sa zone d'utilisation, en forme de « U », perpendiculaires les uns aux autres ou en forme de « L ».

3. Machine automatique de tri et d'emballage de commandes (A) selon la revendication 1, **caractérisée en ce que** : les rayons (11) ont une lumière et un couvercle pour garantir que les paquets contenant les produits (B) et lus avec le code à barres/puce (12), avant le chargement, sont placés dans la zone pertinente dans le système de rayons (10).

4. Machine automatique de tri et d'emballage de commandes (A) selon la revendication 1, **caractérisée en ce que** : il comprend un capteur (23) situé dans le système de pistons (20) qui indique si les pistons (22) reçoivent le produit (B).

5. Machine automatique de tri et d'emballage de commandes (A) selon la revendication 1, **caractérisée en ce que** : il comprend un dispositif d'ajustement (24) situé dans ledit système de pistons (20) et qui permet à la distance entre les pistons (22) d'être ajustée selon les dimensions des produits (B).

6. Machine automatique de tri et d'emballage de commandes (A) selon la revendication 1, **caractérisée en ce que** : le plateau (30) se rapproche du convoyeur (40) en descendant vers le bas afin de garantir que les produits (B) retirés au moyen des pistons (21) sont transférés au convoyeur (40), et laisse les produits (B) sur le convoyeur (40) en reculant.

7. Machine automatique de tri et d'emballage de commandes (A) selon la revendication 1, **caractérisée en ce que** : le convoyeur (40) peut être de forme plate, en formes de « S », de « U », de « L », ou géométriques différentes, et a un système de courroie en rotation continue pour garantir le transport des produits (B).

8. Machine automatique de tri et d'emballage de commandes (A) selon la revendication 1 ou 7, **caractérisée en ce que** : ledit convoyeur (40) peut se déplacer vers le haut et vers le bas.

9. Machine automatique de tri et d'emballage de commandes (A) selon la revendication 1, **caractérisée en ce que** : le code à barres/puce (12) sur les rayons (11) lit l'intégralité des rayons (11) et le type de produits (B) qui sont dans les boîtes et surveille le niveau des rayons (11) en continu et renvoie les informations des rayons vides (11) au système de commande (60).

10. Machine automatique de tri et d'emballage de commandes (A) selon la revendication 1, **caractérisée en ce que** : il comprend un robot et/ou un système d'automatisation afin de charger automatiquement les paquets sur lesdits rayons (11).
